# NEW EUROPEAN PATENT SPECIFICATION

(11) **EP 0 246 745 B2**
(45) Date of publication and mention of the opposition decision: **31.01.2001**
(45) Mention of the grant of the patent: 15.02.1995
(21) Application number: 87303188.4
(22) Date of filing: 13.04.1987
(51) Int. Cl.: C08L 21/00, C08L 23/16

(54) **Elastomeric composition**
Elastomerzusammensetzung
Composition élastomère

(30) Priority: 23.05.1986 US 866854
(43) Date of publication of application: 25.11.1987
(73) Proprietor: UNIROYAL CHEMICAL COMPANY, Inc., Middlebury Connecticut 06749 (US)
(72) Inventor: Allen, Ralph D., New Haven Connecticut 06770 (US); Thiruvengada, Seshan, New Haven Connecticut 06483 (US); Cesare, Frank C., Litchfield Connectucut 06798 (US); Visser, Harry D., Denver Colorado 80231 (US)
(74) Representative: Spott, Gottfried, Dr.

(56) References cited:
- DE-A- 2 101 183
- DE-A- 2 552 467
- FR-A- 1 338 037
- FR-A- 1 566 426
- US-A- 3 884 993

## Description

### Field of the Invention

This invention is directed to a curable composition comprised of a blend of (A) an elastomer having a molecular weight of at least 40,000; (B) a sufficient amount of ethylene/alphaolefin/nonconjugated polyene terpolymer having a molecular weight of between 1,000 and 15,000 such that the viscosity of the blend of components (A) and (B) is at least 5% less than the viscosity of component (A) alone; and (C) a curative. In another aspect, this invention is directed to a process for forming an elastomer comprising such blend. When cured, the compositions of this invention exhibit unexpectedly improved resistance to extraction, high tensile strength and improved ozone resistance, and are thus suitable for many uses such as in precision molded parts, e.g. brakes parts, corner molds, and nonstaining sponges.

### Background of the Invention

In the processing of high molecular weight elastomer compositions, it has become standard to employ plasticizers in order to decrease the viscosity and thereby to improve the workability of the composition. In general, extender oils such as mineral oils or paraffinic oils have been employed to plasticize rubber compounds.

However, the incorporation of such oils into the rubber composition, while effectively plasticizing such composition, will produce a number of deleterious effects upon the cured composition. among these undesirable effects are decreased tensile strength, poor resistance to extraction and poor low temperature flexibility.

US Patent 3,819,592 to Visser et al discloses a process for producing liquid ethylene/propylene/-(optionally) non-conjugated diene copolymers employing a vanadium salt-alkylaluminum halide catalyst and a molecular weight regulator which is a phosphorodithioate, a dithiocarbamate or a dithiocarbonate. This patent broadly discloses that curable liquid ethylene/alphaolefin/diene terpolymers can be utilized as adhesives, caulking compounds, sealants and plasticizing coagulants. However, Visser et al neither discloses any actual formulations nor provides any incentive in so employing such compounds.

FR-A-1566426 and DE-A-2101183 disclose EPDM compositions which are compounded using lubricating oils to improve the melt flow and processing characteristics.

It is elementary polymer chemistry that low molecular weight polymers will, upon curing, possess reduced tensile strength relative to higher molecular weight polymers. Consequently, the finding that the compositions of this invention, which comprise a blend of high and low molecular weight polymers, will exhibit increased tensile strength relative to compositions comprising high molecular weight polymer alone which has been plasticized with equivalent amounts of conventional extender oil is completely unexpected.

Accordingly, it is an object of this invention to provide an easily processable elastomer composition which, upon curing, exhibits unexpectedly high tensile strength.

It is a further object of this invention to provide an elastomer composition which, upon curing, exhibits unexpectedly desirable ozone and resistance to extraction.

It is yet another object of this invention to provide a process for compounding a high molecular weight elastomer such that the composition containing said elastomer will be easily processable and, upon curing, will exhibit unexpectedly desirable tensile strength, ozone resistance and resistance to extraction.

The above objects and other additional objects will become more fully apparent from the following description and accompanying Examples.

### Description of the Invention

In one aspect, this invention is directed to a curable molding composition resistant to weight loss through extraction comprising:
a) an uncured ethylene - propylene copolymer saturated hydrocarbon elastomer, said copolymer including between 0 and 20 weight percent of a non-conjugated diene selected from the group comprising dicyclopentadiene, 5-ethylidiene-2-norbornene or 1,4-hexadiene having a molecular weight of at least 40,000;
b) between 5 and 40 weight percent based on a) plus b) plus c) of a low molecular weight ethylene/ alphaolefin/non-conjugated polyene terpolymer which is liquid at ambient temperatures, having an ethylene content between 25 and 85 percent by weight and a molecular weight between 1,000 and 15,000; the alphaolefin having the formula H₂C=CHR, wherein R is a linear or branched alkyl radical having 1 to 10 carbon atoms and the viscosity of the blend of components a) and b) is at least 5% less than the viscosity of component a) alone;
c) a sufficient amount of curative to cure the elastomer and terpolymer.

The high molecular weight elastomers which comprise component (a) include polymers optionally substituted with halogen, hydroxyl, carboxyl, nitrile or amino moieties.

Blends of two or more high molecular weight elastomeric polymers may be employed.

The high molecular weight elastomeric polymers comprising component (a) of the composition of this invention possess a number average molecular weight of at least about 40,000. Preferably, such polymers possess a number average molecular weight of more than about 50,000 and most preferably of more than about 70,000.

The low molecular weight ethylene/alphaolefin/non-conjugated polyene terpolymers, component (b), which are employed are polymers of ethylene, at least one alphaolefin of the formula H₂C = CHR, wherein R is a linear or branched alkyl radical comprised of from 1 to 10 carbon atoms and at least one copolymerizable non-conjugated polyene. Illustrative of the non-conjugated polyenes which may be employed are aliphatic dienes such as 1,4-hexadiene, 1,5-hexadiene, 1,4-pentadiene, 2-methyl-1,4-pentadiene, 3-methyl-1,4-hexadiene, 4-methyl-1,4-hexadiene, 1,9-decadiene, exo- and endo-dicyclopentadiene and the like; exo- and endo-alkenylnorbornenes, such as 5-propenyl-, 5-(buten-2-yl)-, and 5-(2-methylbuten-[2']-yl)-norbornene and the like; alkylalkenylnorbornenes, such as 5-methyl-6-propenylnorbornene and the like; alkylidenenorbornenes, such as 5-methylene-, 5-ethylidene-, and 5-isopropylidene-2-norbornene, vinylnor-bornene, cyclohexenylnorbornene and the like; alkylnorbornadienes, such as methyl-, ethyl-, and propylnorbornadiene and the like; and cyclodienes such as 1,5-cyclooctadiene, 1,4-cyclooctadiene and the like. The preferred nonconjugated polyenes are 5-ethylidene-2-norbornene, 1,4-hexadiene and dicyclopentadiene.

The ethylene content of the ethylene/alphaolefin/nonconjugated polyene terpolymers that may be employed is between 25% and 85%, is preferably between about 30% and about 75%, and is most preferably between about 40% and about 70%, all by weight. The polyene content of such terpolymers is generally below about 25%, and is preferably between about 2 and about 20%, all by weight.

In addition, the low molecular weight polymers employed in this invention may have incorporated therein and/or at the terminals thereof functional groups such as halogen, sulfo, sulfino, sulfinyl, cyano, epoxy, hydroxy, carboxy, COOR, Si(OR)₃, Si(OOCR)₃ (R being a hydrocarbyl radical having 1-18 carbon atoms) and the like. Such functional groups may be introduced either by replacement, addition or graft polymerization reactions well known to those skilled in the polymerization art.

The polymers (b) employed in the composition of this invention are liquids at ambient temperatures, which are between about 20° and about 40°C. The term "liquid" is employed in conventional terms, that is that the polymer will have a definite volume, but will assume the shape of its container. More specifically, such low molecular weight polymers will be amenable to liquid handling techniques. Such liquid polymers will possess a number average molecular weight of from 1,000 to 15,000, with a preferred range of between about 2,000 and about 10,000, and a most preferred range of between about 4,000 and about 7,000.

As is employed herein, the term "curative" (component (c)) encompasses both curatives and curing systems. As is well known to those skilled in the art, the particular curatives which may be employed in a given composition is generally governed by the availability of unsaturation and/or functional groups present in the polymers to be cured. A wide variety of curatives and curing systems may be employed where applicable, such as free radical generating agents such as organic aromatic and aliphatic peroxides, including, for example, aromatic diacyl peroxides and aliphatic diacyl peroxides, dibasic acid peroxides, ketones peroxides, alkyl peroxyesters and alkyl hydroperoxides. Specific nonlimiting examples of useful organic peroxides and hydroperoxides include diacetylperoxide, dibenzoylperoxides; bis-2,4-dichloro benzoyl peroxide; ditert.-butyl peroxide; dicumylperoxide; tert.-butylperbenzoate; tert.-butylcumyl peroxide; 2,5-bis-(tert.-butylperoxy)-2,5-dimethylhexane; 2,5-bis-(tert.-butylperoxy)-2,5-dimethylhexyne-3; 4,4,4',4'-tetra-(tert.-butylperoxy)-2,2-dicyclohexylpropane; 1,4-bis-(tert.-butylperoxy-isopropyl)-benzene; 1,1-bis-(tert.-butylperoxy)-3,3,5-trimethylcyclohexane; lauroyl peroxide; succinic acid peroxide, cyclohexanone peroxide; tert.-butyl peracetate and butyl hydroperoxide.

Also suitable in applicable cases are the azide curing agents including azidoformates, such as tetramethylenebis(azido-formate) and the like; aromatic polyazides, such as 4,4'-diphenylmethane diazide and the like; and sulfonazides suchas p,p'-oxybis(benzene sulfonyl azide) and the like. Other curatives that may be used include the aldehydeamine reaction products such as formaldehyde-ammonia, formaldehyde-ethylchloride-ammonia, acetaldehyde-ammonia, formaldehyde-aniline, butyraldehyde-aniline, heptaldehyde-aniline, heptaldehyde-formaldhyde-aniline, hexamethylenetetramine, alphaethyl-beta-propylacrolein-aniline and the like; substituted ureas, such as trimethylthiourea, diethylthiourea, dibutylthiourea, tripentylthiourea, 1,3-bis(benzothiazolyl-mercaptomethyl)urea, N,N-diphenylthiourea and the like; guanidines, such as diphenylguanidine, di-o-tolylguanidine, diphenylguanidine phthalate, the di-o-tolylguanidine salt of dicatechol borate and the like; xanthates, such as zinc ethylxanthate, sodium isopropylxanthate, butylxanthic disulfide, potassium isopropylxanthate, and zinc butylxanthate and the like; dithiocarbamates, such as copper dimethyl-, zinc dimethyl-, tellurium diethyl-, cadmium dicyclohexyl-, lead dimethyl-, selenium dibutyl-, zinc pentamethylene-, zinc didecyl-, zinc isopropyloctyldithiocarbamate and the like; thiazoles, such as 2-mercaptobenzothiazole, zinc mercaptothiazolyl mercaptide, 2-benzothiazoly-N,N-diethylthiocarbamyl sulfide, 2,2'-dithiobis(benzothiazole) and the like; imidazoles, such as 2-mercaptoimidazoline, 2-mercapto-4,4,6-trimethyl-dihydropyrimidine) and the like; sulfenamides such as N-t-butyl-2-benzothiazole-, N-cyclohexyl-benzothiazole-, N,N-diisopropyl-benzothiazole-, N-(2,6-dimethylmorpholino)-2-benzo-thiazole-sulfenamide and the like; thiuramdisulfides, such as N,N'-diethyl-, tetrabutyl-, N,N'-diisopropyldioctyl-, tetramethyl-, N,N'-dicyclohexyl-, N,N'-tetralaurylthiuramidsulfide and the like; paraquinonedioxime, dibenzoparaquinonedioxime and the like; and sulfur itself. (See Encyclopedia of Chemical Technology, vol. 17, 2nd edition, Interscience Publishers, 1968; also Organic Peroxides, Daniel Swern, vol. 1, Wiley-lnterscience, (1970).

When a peroxide curative is employed, such curative may be used alone or with auxiliary substances such as sulfur; maleimides, including bis-maleimides; polyunsaturated compounds, such as cyanurate and the like; acrylic esters, such as trimethylolpropane trimethacrylate and the like; organic transition metal salts, such as cobalt octoate, cobalt naphthenate, copper stearate, chromium laurate and the like; and tertiary amines, such as tributylamine, and dimethyloctylamine and the like.

When using sulfur as a curative (whether in its elemental form or in the form of a sulfur donor, e.g., 4,4-dithiomorpholine), it is desirable to include an accelerator and an activator (e.g., a metal salt or oxide).

Mixed peroxide-type or mixed-sulfur-type curing systems may be employed. These include dicumylperoxide plus 2,5-bis-(tert.-butylperoxy)-2,5-dimethyl-hexane or sulfur plus tetramethylthiuramidisulfide plus dicumyl peroxide. See "Vulcanization and Vulcanizing Agents," W. Hoffman, Palmerton Publishing Co., New York, 1967, for an extensive disclosure of curing agents.

Further, one particularly preferred curative is comprised of (i) at least one member of the group consisting of sulfur and sulfur donor compounds; (ii) at least one member of the group selected from organic peroxides and hydroperoxides; and (iii) a sulfur cure accelerator. Particularly preferred sulfur cure accelerators in such tri-component curatives are sulfenamides.

The curatives of the composition of this invention are present in an amount effective to cure the polymer of such composition. Typically, such curatives will be present in amounts of between about 0.5 and about 5 parts by weight per 100 parts of polymer.

In addition to the high molecular weight elastomeric polymer, low molecular weight terpolymer, and curing agent described above, the blends of this invention may further comprise reinforcing agents, fillers, processing aid, extender oils, plasticizers, antioxidants, ultraviolet stabilizers, cross-linking agents and the like, all of which additional components are well known to those skilled in the rubber art.

The low molecular weight ethylene/alphaolefin/non-conjugated polyene terpolymer is present in an amount such that the viscosity of the blend of components (a) and (b) is at least about 5% lower than if such components (b) were not present. Although the preferred amount of component (b) in any given composition will vary in accordance with the particular high molecular weight elastomeric polymer employed (ie, component a), the particular low molecular weight terpolymer, employed (ie, component b), and the amount and composition of other additives included, component (b) will comprise between 5 and 40 preferably between about 10 and about 40 weight percent of the total weight of components (a), (b) and (c).

The blend of this invention is typically prepared by first mixing all the ingredients except the curing agent in a suitable mixing device (such as a Banbury [trademark] type internal mixer, two roll mill, or the like). Such mixing will typically require about 5 minutes, although shorter or longer mixing periods may be employed. This mixing may be performed at temperatures ranging from room temperature or cooler up to about 180°C. If mixing temperatures above the activation temperature of the curing agent are employed, upon completion of the mixing the blended rubber is cooled or allowed to cool to temperature below such activation temperature. The curing agent is then incorporated into the blend by subsequent mixing or milling.

Alternatively, the blend of this invention may be prepared by formulating a high molecular weight polymer component and a low molecular weight polymer component and blending desired amounts of the two components together. In this alternative embodiment, the location of the elements of the curing agent or of the curative is not critical, with any or all such elements or such curative being blended in either the high molecular weight component, the low molecular weight component, or both.

Vulcanization of the blend may be carried out in a press, an oven or other suitable means until crosslinking has occurred to a satisfactory state of cure.

The cured compositions of this invention exhibit unexpectedly desirable tensile strength, high resistance to extraction and high ozone resistance and are thus highly suitable for use in precision molded parts, e.g., brake parts, corner molds, and nonstaining sponges.

### EXAMPLES

The following Examples are intended to further illustrate the invention and are not intended to limit the scope of the invention in any manner.

### Examples 1-4 and Comparative Experiments A and B

Employing the ingredients indicated in Table I, (which are listed in parts per hundred by weight) several rubber compositions were produced as follows:

Elastomers, liquid EPDM, carbon black (N-774), zinc oxide and an antioxidant in the amounts listed in Table I were charged to a Banbury type B internal mixer. Mixing was continued until the temperature reached 154°C, then the mixing was stopped and the inside of the mixer was swept. Blending was then resumed for one more minute and the stock was removed from the mixer.

The curative ingredients (trimethylol propane trimethacrylate and dicumyl peroxide) were incorporated in the cooled rubber stocks on a mill, with care being taken not to exceed 105°C stock temperature.

Samples of the materials of Examples 1-4 and Comparative Experiments A and B were cured 30 minutes at 165°C and tested for their physical properties. The results appear in Table II. These same samples were given an additional hot air post cure at 204°C for 30 minutes. The results of this additional post cure appear in Table III below.

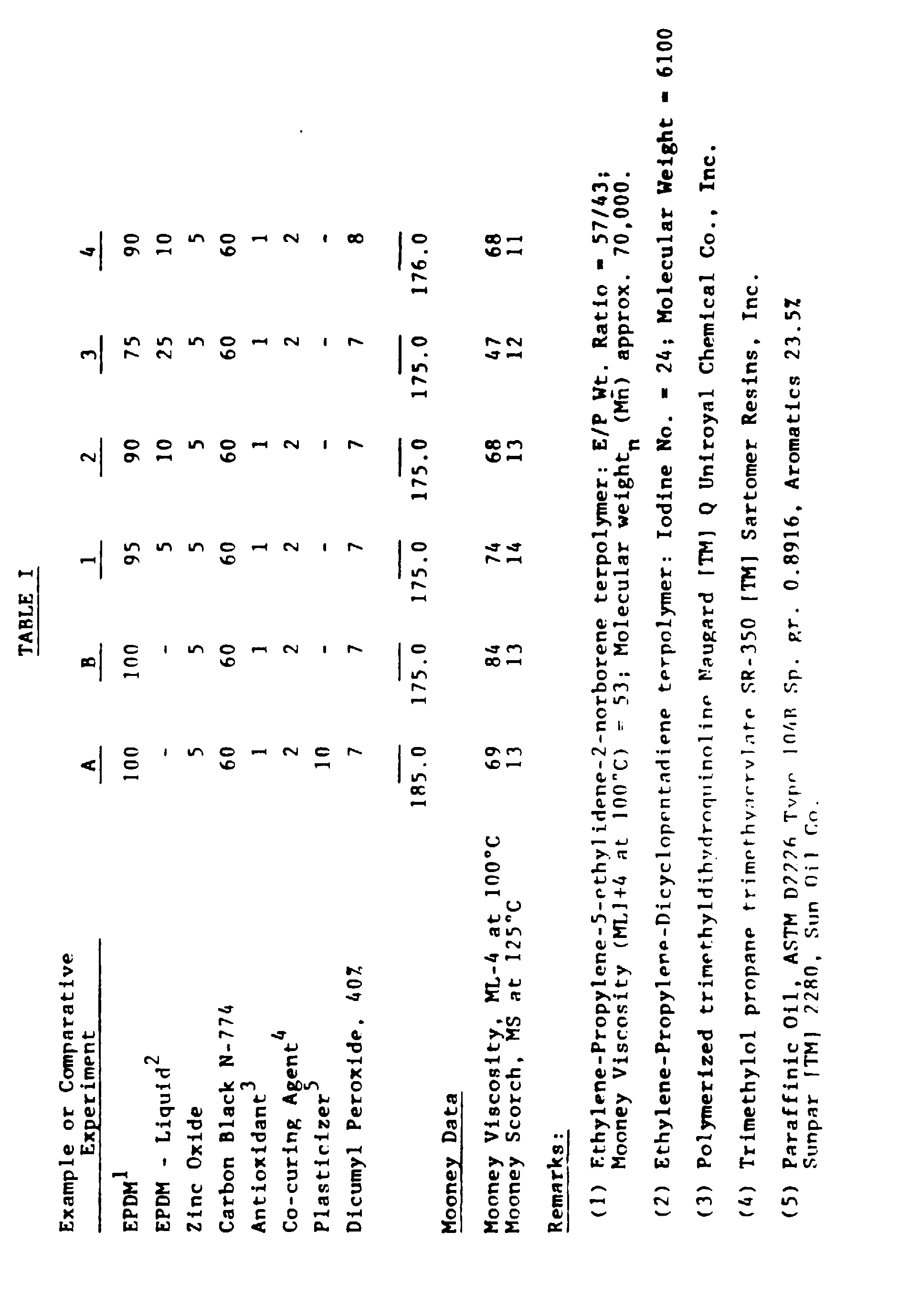

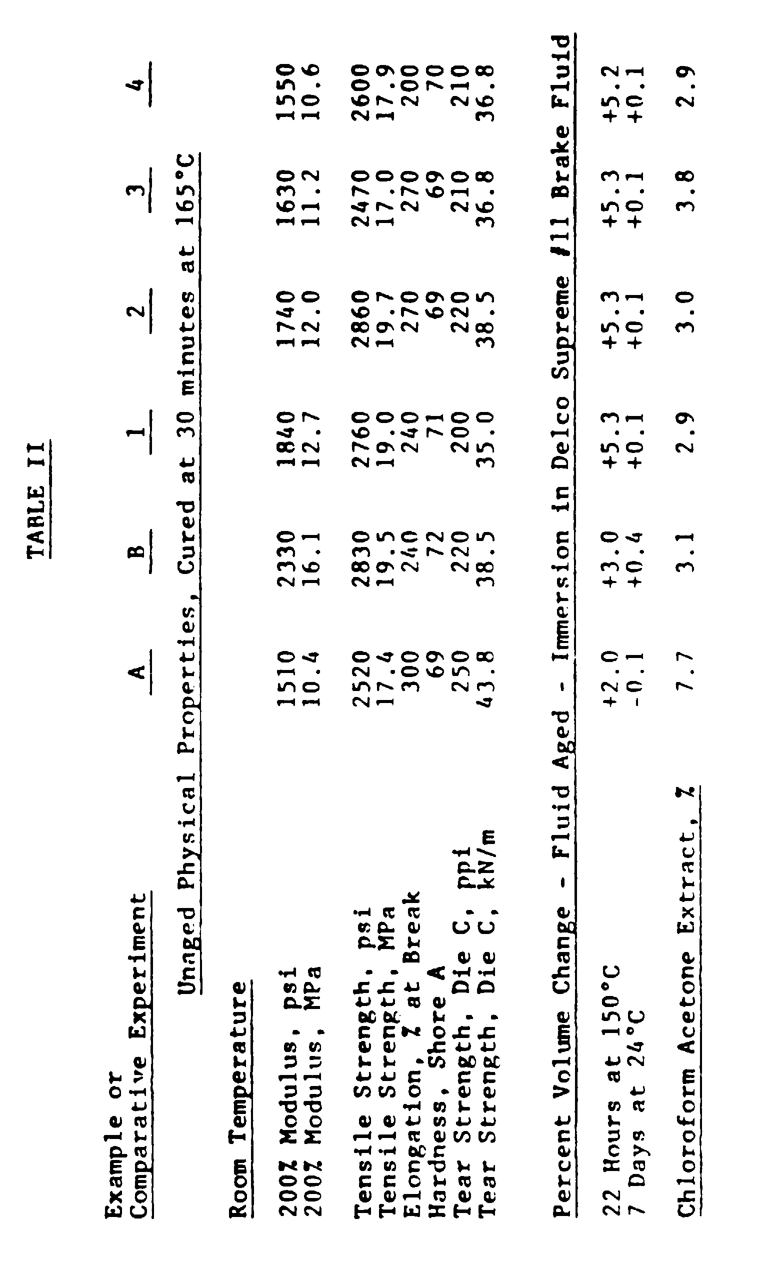

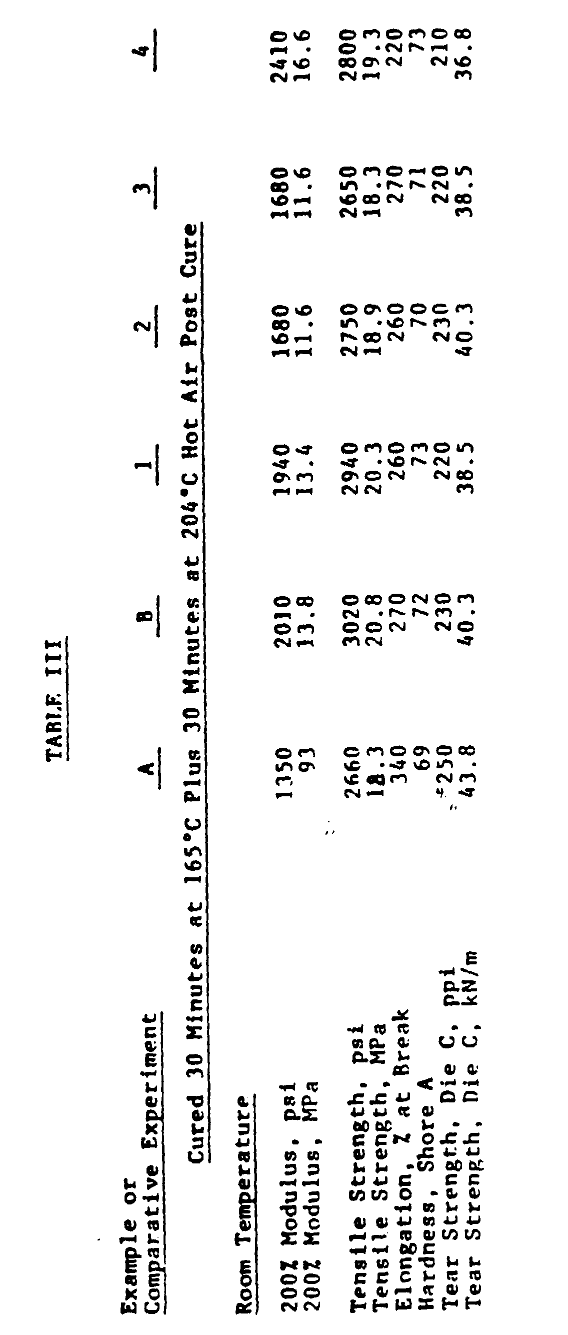

The data above are noteworthy in several respects. Preliminarily, it is seen that the Mooney viscosity of the high molecular weight polymer is considerably reduced - and thus the processability of the blend considerably improved - by the addition of small amounts of low molecular weight polymer. Thus, a comparison of Example 1 with Comparative Experiment B shows a reduction in viscosity of about 11% with the incorporation of only 5% by weight of low molecular weight EPDM.

Moreover, the above data show that for a composition of a given processability (ie, viscosity), the compositions of this invention - which are comprised of low and high molecular weight polymers - upon curing exhibit unexpectedly higher tensile strength than do prior art oil extended compositions composed of high molecular weight polymer alone. Specifically, a comparison of Example 2 with Comparative Experiment A indicates that although these compositions have a similar viscosity (68 vs 69 respectively) the tensile strength of the cured composition of this invention is unexpectedly higher 19.7 MPa (2860 psi) vs 17.4 MPa (2520 psi) after being cured for 30 minutes at 165°C; 19.0 MPa (2750 psi) vs 18.3 MPa (2660 psi) after being cured for 30 minutes at 165°C plus 30 minutes at 204°C hot air post cured.

Further, the above data indicate the reduced amount of extraction exhibited by the compounds of this invention - an essential result in many uses, such as in brake compositions, where high extraction is undesirable.

### Examples 5 and 6 and Comparative Experiments C and D

In order to show the ozone resistance of the compositions of this invention, a series of blends were prepared by coflocculating the ingredients shown in Table IV below. Samples of the blends were cured for 15 minutes at 350°F (176°C) and their physical properties measured. The results of such testing are summarized in Table V.

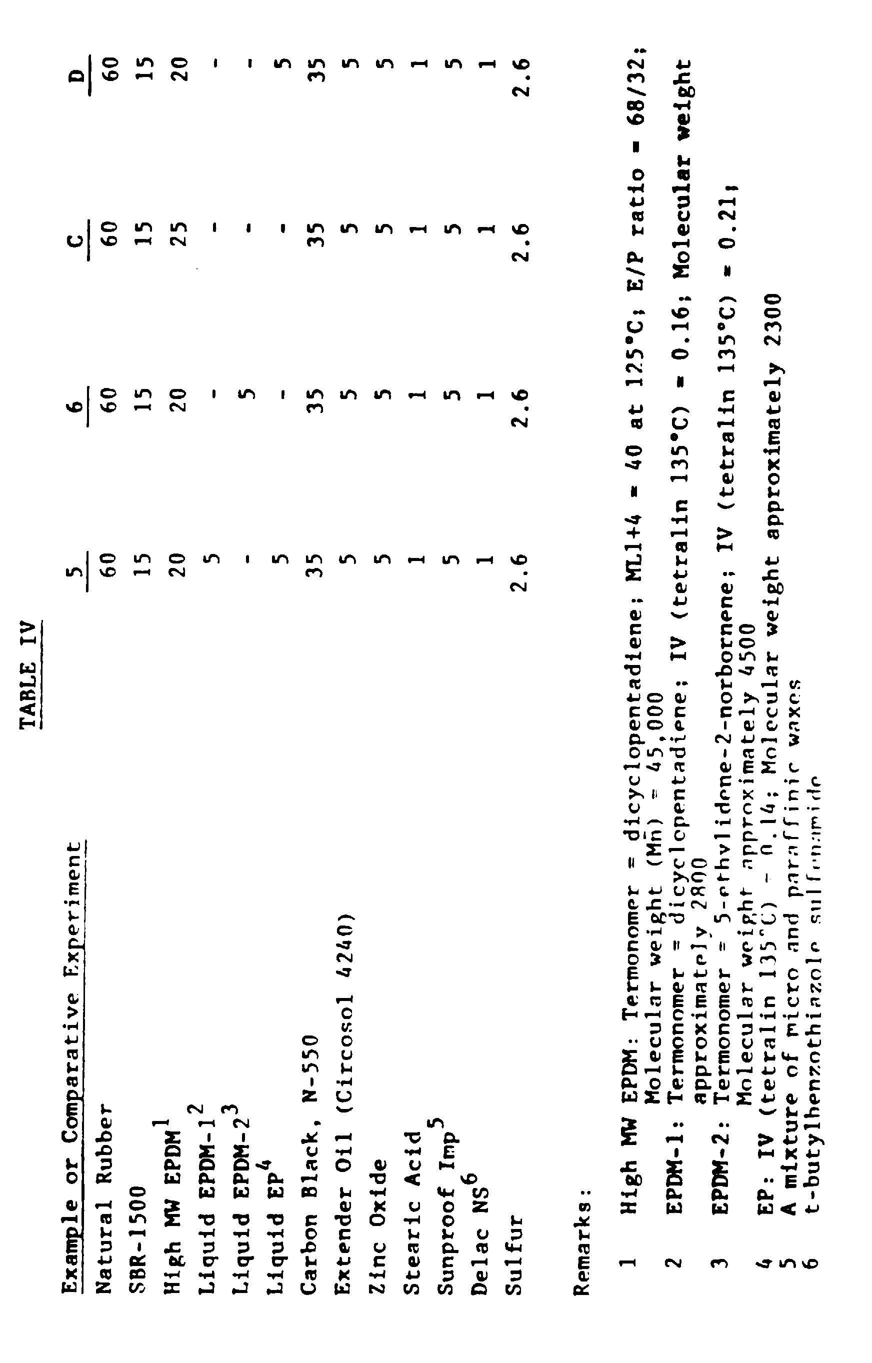

**TABLE V**

| Example or Comparative Experiment | 5 | 6 | C | D |
|---|---|---|---|---|
| Natural Rubber | 60 | 60 | 60 | 60 |
| SBR-1500 | 15 | 15 | 15 | 15 |
| High MW EPDM | 20 | 20 | 25 | 20 |
| Liquid EPDM-1 | 5 | - | - | - |
| Liquid EPDM-2 | - | 5 | - | - |
| Liquid EP | 5 | - | - | 5 |
| Bent Loop (Ozone Resistance) 50 pphm/100°F, hours ASTM D518 Method B | 1000+ | 1000+ | 2 | 2 |
| Tensile, psi | 1710 | 1790 | 1680 | 1260 |
| Tensile, MPa | 11.8 | 12.3 | 11.6 | 8.7 |
| 300% Modulus, psi | 730 | 590 | 820 | 400 |
| 300% Modulus, MPa | 5.8 | 4.1 | 5.7 | 2.3 |
| Elongation, % | 550 | 590 | 510 | 660 |

The above data indicate the improved ozone resistance as well as the unexpectedly improved tensile strength exhibited by the compositions of this invention.

## Claims

1. A curable molding composition resistant to weight loss through extraction comprising:
a) an uncured ethylene - propylene copolymer saturated hydrocarbon elastomer, said copolymer including between 0 and 20 weight percent of a non-conjugated diene selected from the group comprising dicyclopentadiene, 5-ethylidene-2-norbornene or 1,4-hexadiene having a molecular weight of at least 40,000;
b) between 5 and 40 weight percent based on a) plus b) plus c) of a low molecular weight ethylene/ alphaolefin/non-conjugated polyene terpolymer which is liquid at ambient temperatures, having an ethylene content between 25 and 85 percent by weight and a molecular weight between 1,000 and 15,000; the alphaolefin having the formula H₂C=CHR, wherein R is a linear or branched alkyl radical having 1 to 10 carbon atoms and the viscosity of the blend of components a) and b) is at least 5% less than the viscosity of component a) alone;
c) a sufficient amount of curative to cure the elastomer and terpolymer.

2. A composition according to claim 1 characterised in that the molecular weight of component (b) is between 2,000 and 10,000.

3. A composition according to claim 2 characterised in that the molecular weight of component (b) is between 3,000 and 7,000.

4. A composition according to any of claims 1 or 3, characterised in that the component (c) comprises at least one organic peroxide and hydroperoxide.

5. A composition according to any of claims 1 or 3, characterised in that the component (c) comprises (i) at least one member of the group consisting of sulfur and sulfur donor compounds; (ii) at least one member of the group consisting of organic peroxides and hydroperoxides; and (iii) a sulfur cure accelerator.

6. A composition according to claim 5 characterised in that said sulfur cure accelerator is a sulfenamide.

7. A composition according to any of claims 1 to 6 characterised in that the component (b) comprises a minor amount of the composition.

## Patentansprüche

1. Vulkanisierbare Formzusammensetzung, beständig gegenüber einem Gewichtsverlust durch Extraktion, umfassend:
a) ein nicht vulkanisiertes, gesättigtes Kohlenwasserstoffelastomer aus Ethylen-Propylen-Copolymer, wobei das Copolymer zwischen 0 und 20 Gewichts-% eines nichtkonjugierten Diens einschließt, ausgewählt aus der Gruppe umfassend Dicyclopentadien, 5-Ethyliden-2-norbornen oder 1,4-Hexadien, mit einem Molekulargewicht von mindestens 40.000;
b) zwischen 5 und 40 Gewichtsprozent, bezogen auf a) plus b) plus c), eines Ethylen/Alphaolefin/nichtkonjugiertes Polyen-Terpolymers mit niedrigem Molekulargewicht, das bei Umgebungstemperaturen flüssig ist, mit einem Ethylengehalt zwischen 25 und 85 Gewichtsprozent und einem Molekulargewicht zwischen 1.000 und 15.000, wobei das Alphaolefin die Formel H₂C=CHR aufweist, wobei R einen linearen oder verzweigten Alkylrest mit 1 bis 10 Kohlenstoffatomen darstellt, und die Viskosität der Mischung aus den Bestandteilen a) und b) mindestens 5% kleiner als die Viskosität des Bestandteils a) alleine ist,
c) eine ausreichende Menge eines Vulkanisationsmittels, um das Elastomer und Terpolymer zu vulkanisieren.

2. Zusammensetzung nach Anspruch 1, **dadurch gekennzeichnet**, **daß** das Molekulargewicht des Bestandteils (b) zwischen 2.000 und 10.000 beträgt.

3. Zusammensetzung nach Anspruch 2, **dadurch gekennzeichnet**, **daß** das Molekulargewicht des Bestandteils (b) zwischen 3.000 und 7.000 beträgt.

4. Zusammensetzung nach einem der Ansprüche 1 oder 3, **dadurch gekennzeichnet**, **daß** der Bestandteil (c) mindestens ein organisches Peroxid und Hydroperoxid umfaßt.

5. Zusammensetzung nach einem der Ansprüche 1 oder 3, **dadurch gekennzeichnet**, **daß** der Bestandteil (c) folgendes umfaßt: (i) mindestens ein Element aus der Gruppe bestehend aus Schwefel und Schwefeldonorverbindungen, (ii) mindestens ein Element aus der Gruppe bestehend aus organischen Peroxiden und Hydroperoxiden, und (iii) einen Schwefel-Vulkanisationsbeschleuniger.

6. Zusammensetzung nach Anspruch 5, **dadurch gekennzeichnet, daß** der Schwefel-Vulkanisationsbeschleuniger ein Sulfenamid ist.

7. Zusammensetzung nach einem der Ansprüche 1 bis 6, **dadurch gekennzeichnet, daß** der Bestandteil (b) eine kleinere Menge der Zusammensetzung bildet.

## Revendications

1. Composition de moulage polymérisable résistante à une perte de poids par extraction, comprenant :
a) un élastomère d'hydrocarbure saturé copolymére d'éthylène - propylène non polymérisé, ledit copolymèe incluant entre 0 et 20% en poids d'un diène non-conjugué choisi dans le groupe comprenant le dicyclopentadiène, le 5-éthylidène-2-norbornène ou le 1,4-hexadiène ayant un poids moléculaire d'au moins 40 000;
b) entre 5 et 40% en poids sur la base de a) plus b) plus c) d'un terpolymère à faible poids moléculaire éthylène/alphaoléfine/polyène non-conjugué qui est liquide aux températures ambiantes, ayant une teneur en éthylène entre 25 et 85% en poids et un poids moléculaire entre 1 000 et 15 000; l'alphaoléfine ayant la formule H₂C = CHR, où R est un radial alkyle linéaire ou ramifié ayant 1 à 10 atomes de carbone et la viscosité du mélange des composants a) et b) est au moins 5% inférieure à la viscosité du composant a) seul;
c) une quantité suffisante d'un polymérisateur pour polymériser l'élastomère et le terpolymère.

2. Composition selon la revendication 1, caractérisée en ce que le poids moléculaire du composant(b) est entre 2 000 et 10 000.

3. Composition selon la revendication 2, caractérisée en ce que le poids moléculaire du composant(b) est entre 3 000 et 7 000.

4. Composition selon l'une quelconque des revendications 1 ou 3, caractérisée en ce que le composant (c) comprend au moins un hydroperoxyde et peroxyde organique.

5. Composition selon l'une quelconque des revendications 1 ou 3, caractérisée en ce que le composant (c) comprend (i) au moins un membre du groupe consistant en du soufre et des composés donneurs de soufre, (ii) au moins un membre du groupe consistant en des hydroperoxydes et peroxydes organiques; et (iii) un accélérateur de polymérisation soufre.

6. Composition selon la revendication 5, caractérisée en ce que ledit accélérateur de polymérisation soufre est un sulfénamide.

7. Composition selon l'une quelconque des revendications 1 à 6, caractérisée en ce que le composant (b) comprend une quantité mineure de la composition.
